Europäisches Patentamt

European Patent Office

Office européen des brevets

(11) Veröffentlichungsnummer: **0 224 060**
**A1**

## EUROPÄISCHE PATENTANMELDUNG

(21) Anmeldenummer: 86114953.2

(22) Anmeldetag: 28.10.86

(51) Int. Cl.⁴ **A22C 13/00**

(30) Priorität: 31.10.85 DE 3538702

(43) Veröffentlichungstag der Anmeldung:
03.06.87 Patentblatt 87/23

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Kastl, Erna**
**Pulvermühle 1**
**D-6272 Niedernhausen(DE)**
Erfinder: **Klenk, Ludwig**
**Jungferweg 20**
**D-6227 Oestrich-Winkel III(DE)**
Erfinder: **Stenger, Karl**
**Theodor-Heuss-Strasse 27**
**D-6220 Rüdesheim(DE)**
Erfinder: **Faust, Horst**
**Lohmühlweg 17**
**D-6200 Wiesbaden(DE)**

(54) **Bahn- oder schlauchförmige Verpackungsfolie, insbesondere Wursthülle, mit Sperrschicht.**

(57) Die bahn-oder schlauchförmige Verpackungsfolie besteht aus einer Trägerschicht auf Basis von faserverstärkter Cellulose und einem geschlossenen thermoplastischen, siegelfähigen Harzüberzug auf Basis von Vinylidenchlorid-Einheiten enthaltenden Mischpolymeren. Dieser Harzüberzug ist zur Verbesserung der Knickbeständigkeit aus wenigstens zwei übereinanderliegenden Schichten aufgebaut, wobei die der Trägerschicht benachbarte erste Schicht des Harzüberzuges aus einem flexible Filme bildenden VDC-Mischpolymerisat und die äußere zweite Schicht des Harzüberzuges aus einem harte Filme bildenden VDC-Mischpolymerisat besteht. Die bahnförmige Folie ist geeignet zur Herstellung von - schlauchförmigen Verpackungshüllen, insbesondere Wursthüllen, mit einer Längsnaht.

EP 0 224 060 A1

## Bahn-oder schlauchförmige Verpackungsfolie, insbesondere Wursthülle, mit Sperrschicht

Die Erfindung bezieht sich auf eine bahn-oder - schlauchförmige Verpackungsfolie, insbesondere Wursthülle, von der im Oberbegriff des Anspruchs 1 genannten Art und auf ein Verfahren zu ihrer Herstellung.

Aus der EP-A-0 054 162 ist eine Schlauchhülle, insbesondere Wursthülle, bekannt geworden, die aus einer Folienbahn hergestellt wird. Hierzu wird die Folienbahn zu einem Schlauch geformt und die beiden sich genäherten Randbereiche mit einem Folienstreifen verbunden, wobei der Folienstreifen gegen die gasundurchlässige siegelfähige Oberflächenschicht der Folienbahn gesiegelt wird. Diese Schlauchhülle ist wegen ihrer sauerstoff-, wasser-und wasserdampfundurchlässigen Schicht beispielsweise als Wursthülle für Koch-und Brühwürste geeignet.

Dagegen zeigt die Folie aus faserverstärkter Cellulose nach der EP-A-0 149 071 außer einer geschlossenen Sperrschicht noch zusätzlich auf der anderen Oberfläche eine thermoplastische Kunstharzschicht mit linienförmigen Unterbrechungen. Aus dieser bekannten Folie lassen sich ebenfalls Schläuche mit Siegelnaht herstellen.

Diese Wursthüllen mit Barriereschicht können nach üblichen Verfahren gerafft werden. Hierzu werden größere Schlauchlängen in Richtung ihrer Längsachse gefördert und im aufgeblasenen Zustand gegen eine Gegenkraft gerafft. Die Länge der gerafften Hülle, die auch als Raupe bezeichnet wird, beträgt gewöhnlich nur noch 1 bis 3 % der ursprünglichen Schlauchlänge. Bei ihrer Verwendung wird in die einseitig verschlossenen Schlauchraupen mit Hilfe von Wurstabfüllmaschinen fortlaufend Wurstmasse eingepreßt, wobei die Schläuche wieder entrafft werden.

Es ist bereits seit langem bekannt, daß Sperrschichten auf der Oberfläche von Celluloseschläuchen gegenüber mechanischer Beanspruchung empfindlich sind und leicht beschädigt werden können. Mechanische Beanspruchung findet insbesondere beim Raffen, vor allem im Bereich der Kanten der Schlauchfalten, statt, wo der Schlauch und auch die Oberflächenschicht stark geknickt werden. Häufig bricht der Schlauchüberzug aber nicht beim oder unmittelbar nach dem Raffvorgang, sondern verhält sich zunächst einwandfrei. Erst beim Lagern des gerafften Schlauches neigt dann der Überzug an den am stärksten beanspruchten Stellen zum Brechen. Dies führt zu einer unkontrollierbaren und unerwünschten Durchlässigkeit des Überzugs gegenüber Wasserdampf, Sauerstoff und Aromastoffen, wodurch die Haltbarkeit und die Qualität der Wurst beeinträchtigt wird. Dieser Effekt wird zurückgeführt auf die Neigung von Polymeren mit hohem Anteil an Vinylidenchlorid, nach der Bildung eines zunächst geschmeidigen Films zu versproden, wobei dieser Alterungsprozeß bereits bei der Filmbildung einsetzt und nach einigen Wochen seinen Endpunkt erreicht, bei dem der Überzug seine ursprüngliche Geschmeidigkeit und Dehnfähigkeit verloren hat. Zur Vermeidung dieser Nachteile soll nach der DE-C-25 12 994 ein quartäres Mischpolymerisat aus Vinylidenchlorid, Acrylnitril, Acrylsäure und Methylacrylat als Überzugsmaterial für geraffte Schlauchhüllen verwendet werden. Diese Beschichtungen ergeben auf der Innenseite von Celluloseschläuchen dauerhaft flexible Überzüge.

Wie sich nun gezeigt hat, sind diese relativ flexible Überzüge bildenden PVDC-Mischpolymerisate für die Herstellung von gerafften Schlauchhüllen mit äußerer Sperrschicht weniger gut geeignet. Die Beschichtung neigt an den Knickstellen zum Brechen, wobei die Ursache hierfür nicht ohne weiteres erkennbar ist. Auch beim Lagern von im flachgelegten Zustand aufgewickelten Schläuchen mit äußerer Sperrschicht besteht die Gefahr, daß der Überzug an den Knickstellen bricht.

Es ist deshalb Aufgabe der Erfindung, eine bahn-oder schlauchförmige Verpackungsfolie aus faserverstärkter regenerierter Cellulose anzugeben, die als Wursthülle mit vorzugsweise äußerer Sperrschicht für Sauerstoff, Wasser und Wasserdampf sich einwandfrei aufwickeln, insbesondere aber raffen läßt, wobei die Sperrschicht durch die dabei auftretende starke Knickbeanspruchung nicht mehr beschädigt wird und auch bei längerer Lagerung unter tropischen Bedingungen an den Knickstellen undurchlässig bleibt. Es ist ferner Aufgabe der Erfindung, ein Verfahren zur Herstellung dieser bahn-oder schlauchförmigen Folie zu finden, das mit geringem technischem Aufwand durchgeführt werden kann. Außerdem muß der Überzug den Belastungen bei Verarbeitung und Lagerung der Wursthülle standhalten.

Ausgehend von einer Wursthülle mit einer Trägerschicht aus faserverstärkter Cellulose und einer geschlossenen, gasundurchlässigen Harzschicht auf ihrer einen Oberfläche stößt man bei der Suche nach einer Lösung dieser Aufgabe auf die Schwierigkeit, daß bei Abänderungen im Überzug seine bisherigen vorteilhaften Eigenschaften negativ beeinflußt werden können. Wird die Wursthülle gerafft, so muß auch der hinsichtlich der Knickfestigkeit verbesserte Überzug nicht nur ausreichend mechanisch stabil, sondern weiterhin auch flexibel, dehn-und schrumpffähig sein.

Außerdem darf die praktisch völlige Undurchlässigkeit der bekannten Barriereschichten gegenüber Gasen, insbesondere Wasser und Luftsauerstoff, nicht verschlechtert werden.

Diese Aufgaben werden gelöst durch die im Anspruch 1 angegebene Verpackungsfolie, sowie durch das Verfahren zu ihrer Herstellung mit den im Anspruch 7 genannten Merkmalen.

Als ein im wesentlichen gasundurchlässiger Harzüberzug ist ein Überzug zu betrachten, der eine Wasserdampfdurchlässigkeit von kleiner als 10, insbesondere kleiner als 2 g/m².d (DIN 53 122) besitzt. Die Überzugsschicht ist völlig unterbrechungsfrei und wird deshalb auch als "Sperrschicht" oder "Barriereschicht" bezeichnet.

Bahn-oder schlauchförmige Folien auf Basis von faserver stärkter Cellulose mit einer gasundurchlässigen Oberflächenschicht aus einem Harz auf Basis eines aus einem Vinylidengruppen enthaltenden Mischpolymeren, die gegebenenfalls durch eine haftvermittelnde Harzschicht mit der Folienoberfläche verankert ist, aus diesen Folienbahnen hergestellte Schlauchhüllen mit einer Längsnaht und ihre Herstellung sind bekannt. Die eigentliche Trägerschicht der Folie besteht aus faserverstärkter Cellulose (Zellglas, regenerierte Cellulose, Cellulosehydrat) und wird nach dem Viskoseverfahren hergestellt. Sie zeigt die für Wursthüllen übliche Dicke von 50 bis 200 μm, entsprechend einem Flächengewicht von 50 bis 250 g/m² und gewöhnlich einen Feuchtigkeitsgehalt von weniger als 15 Gew.-%, bezogen auf das Gesamtgewicht. Nur zum Raffen der Schlauchhülle ist ein höherer Feuchtigkeitsgehalt erforderlich. Daneben hat die Verpackungsfolie einen üblichen Weichmachergehalt (Glycerin) von zweckmäßigerweise 20 bis 40 Gew.-%. Die gesamte Dicke des Harzüberzuges liegt bei 5 bis 25, insbesondere 8 bis 15 μm.

Unter Haftvermittler in bezug auf Oberflächenschichten sind bekanntlich Stoffe oder Stoffgemische zu verstehen, die vor dem Auftrag der Schichten auf die Oberfläche der Trägerschicht aufgebracht werden, um die Haftung zwischen der Trägerschicht und dem Überzug zu verbessern. Falls erforderlich, soll er im vorliegenden Fall die erste Ober-flächenschicht auf der Oberfläche der Trägerschicht naßfest verankern und befindet sich zwischen der ersten Oberflächenschicht und der Trägerschicht. Er ist vorzugsweise ein wasserunlösliches, gehärtetes, kationisches Harz. Polyurethanharze, Nitrocellulose und andere als wasserunlösliche Verankerungsmittel bekannte Verbindungen können ebenfalls eingesetzt werden. Die den Haftvermittler enthaltende Dispersion wird bereits bei der Herstellung der faserverstärkten Trägerschicht aus Cellulosehydrat auf das bereits regenerierte, aber noch nicht getrocknete bahn- oder schlauchförmige Cellulosehydrat-Gel aufgebracht. Dieser Auftrag kann vor, gleichzeitig oder nach der Behandlung des Cellulosehydrat-Gels mit einem Weichmacher, wie z.B. einem Polyol, vorgenommen werden. Die faserverstärkte Trägerschicht aus regenerierter, aber noch nicht getrockneter Cellulose, d.h. aus Cellulosehydrat-Gel, wird vor dem Beschichten mit der die erste Oberflächenschicht ausbildenden Dispersion mit einer wäßrigen Lösung überzogen, die bis zu 25 Gew.-% eines dispergierbaren Haftvermittlers, insbesondere eines wärmehärtbaren kationischen Harzes enthält.

Durch die anschließenden Trockenstufen wird das wärmehärtbare kationische Harz zu seiner wasserunlöslichen Form gehärtet und geht eine dauerhafte Bindung mit der Oberfläche der Trägerschicht ein. Die haftvermittelnde Harzschicht hat ein Flächengewicht von etwa 30 bis 300 mg/m², vorzugsweise 40 bis 75 mg/m². Besonders bevorzugte kationische hitzehärtbare Harze sind Kondensationsprodukte von Polyamidpolyamin oder aliphatischen Polyaminen oder von Polyamiden mit bifunktionellen Halohydrinen oder deren Derivaten, insbesondere Epichlorhydrin.

Nach dem Aufbringen der Dispersion des Haftvermittlers erfolgt die als Teilentwässerung oder Vortrocknung bezeichnete Reduzierung des Wassergehaltes der Trägerschicht aus Cellulosehydrat-Gel auf einen Wassergehalt von 130 bis 200 Gew.-%, bezogen auf die Cellulose. Bei dieser Teilentwässerung wird unter Wärmeeinwirkung das kationische Harz teilweise vorgehärtet.

Wesentlich für die Lösung des eingangs dargestellten Problems ist das aufeinanderfolgende Aufbringen von mindestens zwei Oberflächenschichten auf eine Oberfläche der Trägerschicht, die zusammen den gasundurchlässigen Harzüberzug bilden. Die Begriffe "erste" und "zweite" Oberflächenschicht sollen die Reihenfolge angeben, in der diese zeitlich aufeinanderfolgend auf die eine Oberfläche der Trägerschicht aufgebracht werden.

Das Kunstharz der ersten Oberflächenschicht ist ein Vinylidenchlorid(VDC)-Mischpolymer, welches relativ weiche, flexible Schichten ausbildet, die auch bei längerer Lagerzeit nicht kristallisieren und im wesentlichen im amorphen Zustand verbleiben. Solche VDC-Mischpolymere enthalten bekanntlich einen relativ niedrigen Vinylidenchlorid-(VDC)-Anteil, der gewöhnlich unter 88 Gew.% liegt, und als weitere filmbildende Polymere bildende Comonomer-Einheiten vorzugsweise Alkylacrylat oder Alkylmethacrylat mit langkettigen Alkylresten in der Estergruppe oder Vinylester von Fettsäuren ($C_3$ -$C_{12}$), wobei die Länge der C-H-Gruppe ein sterisches Hindernis für eine Kristallisation der Polymerketten bildet. Zweckmäßigerweise liegen die Alkylgruppen in den Acrylaten/Methacrylaten im Be reich von $C_3$ bis $C_8$, wie z.B. Butylacrylat oder 2-Äthylhexylacrylat. Auch Comonomere mit stark polaren Gruppen, wie z.B. Hydroxyäthyl-methacrylat oder -acrylat, Äthoxyäthylacrylat, Acrylamid und Alkyl-und Dialkylacrylamid (Alkyl $C_1$ -$C_3$), insbesondere aber Acrylnitril oder Methacrylnitril, ergeben relativ weiche, flexible Schichten. Neben diesen hauptsächlich vorhandenen Comonomer-Einheiten können noch im untergeordneten Umfang weitere äthylenisch ungesättigte Verbindungen mit den erwähnten Monomeren zu dem VDC-Mischpolymeren polymerisiert sein. Hierzu gehören z.B. ungesättigte Säuren und ihre Derivate, insbesondere Acrylsäure und Methacrylsäure, mit denen z.B. die Haftung, das Verlaufen und Benetzen des Polymeren beeinflußt werden kann. Ein Anteil bis zu 2 Gew.-% im Mischpolymerisat dieser Comonomeren ist gewöhnlich ausreichend. Neben den VDC-Einheiten können bis zu drei weitere Comonomer-Einheiten im VDC-Mischpolymer vorliegen.

Dagegen ist der Rohstoff für die zweite Oberflächenschicht der Folie ein VDC-Mischpolymeres, welches gewöhnlich einen höheren VDC-Gehalt besitzt und allein schon deshalb eine Oberflächenschicht ausbildet, welche nach ihrer Herstellung zu starker Kristallisation neigt und dadurch wesentlich härter wird als Schichten, welche vom VDC-Mischpolymer der ersten Oberflächenschicht gebildet werden. Die Härte der zweiten Oberflächenschicht ergibt sich ferner durch die als weiteres Comonomer im VDC-Mischpolymer vorzugsweise enthaltenen Alkylacrylat-bzw. Alkylmethacrylat-Einheiten (Alkyl = Methyl, Äthyl). Neben diesen hauptsächlich vorhandenen Comonomer-Einheiten können noch im untergeordneten Umfang weitere äthylenisch ungesättigte Verbindungen mit dem VDC und den Acrylaten/Methacrylaten polymerisiert sein. Zu diesen Comonomeren gehören auch in diesem Fall vor allem ungesättigte Säuren und ihre Derivate, insbesondere Acrylsäure und Methacrylsäure, wobei ein Anteil bis zu 2 Gew.-% im Mischpolymerisat gewöhnlich ausreicht. Neben den VDC-Einheiten, die gewöhnlich 85 bis 95 Gew.-% des Mischpolymers ausmachen, können bis zu drei weitere Comonomer-Einheiten im PVDC-Mischpolymer vorhanden sein.

Geeignete VDC-Mischpolymere werden beispielsweise durch Additionspolymerisation der Monomeren in wäßriger Dispersion erhalten. Diese wäßrigen Dispersionen sind im Handel erhältlich. Die für die erste Oberflächenschicht verwendeten Dispersionen werden in den technischen Merkblättern der Herstellerfirmen dadurch charakterisiert, daß sie besonders weiche, flexible, geschmeidige, amorphe Filme bilden, während die für die Bildung der zweiten Oberflächenschicht im Handel erhältlichen Dispersionen nach den technischen Merkblättern der Herstellerfirmen kristallisierende Filme und Beschichtungen bilden, welche eine harte, nicht blockende Oberfläche zeigen, besonders dicht gegen Wasserdampf, Gase und Aromastoffe sind und gegen Wasser, Öle, Fette und viele Chemikalien besonders resistent sind.

Ein Verfahren zur Herstellung der Folie ist im Anspruch 7 angegeben.

Die gegebenenfalls zu einem Schlauch gebogene Faserbahn wird vorzugsweise beidseitig mit einer Viskoselösung behandelt, insbesondere in eine Viskoselösung getaucht oder mit einer Viskoselösung beschichtet, z.B. mit schlitzförmigen Düsen, Walzen oder durch Sprühvorrichtungen, anschließend mit Fällflüssigkeit koaguliert und in regenerierte Cellulose übergeführt. Es ist auch möglich, in die Viskose Verstärkungsfasern einzuarbeiten. Die Fasern enthaltende Viskose wird dann durch eine Düse in das Koagulationsbad ausgepreßt unter Bildung einer Gelbahn. Die Viskoselösung ist eine alkalische Lösung von Natrium-Cellulosexanthogenat. Das Spinnbad zur Koagulation der Viskose enthält gewöhnlich Schwefelsäure, Natriumsulfat und/oder Ammoniumsulfat. In weiteren Stufen wird das aus koagulierter Viskose bestehende faserverstärkte bahn-oder schlauchförmige Produkt in saurem Medium zu Cellulosehydrat-Gel regeneriert, zur Entfernung von Säure und Salzen mit Wasser gewaschen, entschwefelt, gegebenenfalls durch ein Bleichbad und schließlich durch ein Weichmacherbad geführt.

Bevor die faserverstärkte Bahn bzw. der faserverstärkte Schlauch aus Cellulosehydrat-Gel abschließend durch intensive Trocknung bei 90 bis 160°C in regenerierte Cellulose übergeführt und gegebenenfalls durch Konditionierung auf einen Wassergehalt bis zu 15 Gew.-%, bezogen auf das Gesamtgewicht, eingestellt wird, wird, wie im Anspruch 7 angegeben, die Bahn bzw. der Schlauch aus Cellulosehydrat-Gel -nachdem sie bzw. er gegebenenfalls mit einer einen Haftvermittler enthaltenden Flüssigkeit behandelt wurde -teilentwässert und danach aufeinanderfolgend auf ihrer einen Oberfläche, beim Schlauch vorzugsweise auf der äußeren, mit den die erste und die zweite Oberflächenschicht ausbildenden wäßrigen PVDC-Dispersionen beaufschlagt. Die Reihenfolge der auf die Teilentwässerung folgenden Beschichtungen ist einzuhalten.

Eine bahnförmige Folie mit besonders vorteilhaften mechanischen Eigenschaften wird erhalten, wenn man, wie in EP-A-0 054 162 beschrieben, die Faserbahn, insbesondere während die Viskose koaguliert wird und beim abschließenden Trockenprozeß, gegebenenfalls aber auch während der Beschichtung mit Viskose, beim Regenerieren, beim Beschichten mit Haftvermittler und/oder beim Beschichten mit den PVDC-Dispersionen, an den Rändern festhält, so daß ein Schrumpfen der Bahn verhindert wird.

Es ist für den Auftrag der PVDC-Dispersionen wesentlich, unmittelbar vor dem Beaufschlagen der faserverstärkten Folie aus bereits regenerierter, aber noch nicht getrockneter Cellulose, d.h. aus Cellulosehydrat-Gel, mit der die erste Oberflächenschicht ausbildenden PVDC-Dispersion den Wassergehalt dieser Folie, der bekanntlich relativ hoch ist und gewöhnlich 240 bis 300 Gew.-%, bezogen auf die Cellulose, beträgt, auf Werte von 130 bis 225, insbesondere 160 bis 200 Gew.-% zu reduzieren. Während dieser als Teilentwässerung bezeichneten Zwischenstufe läßt man einen Schrumpf der Folie quer zur Maschinenrichtung zu, indem man während dieses Vortrocknens die bahnförmige Folie nicht an den Rändern festhält, bzw. die schlauchförmige Folie z.B. nur mit einem geringen Druck an Stützluft aufbläst. Die für diese Teilentwässerung erforderliche Wärme wird mit an sich bekannten Mitteln der Folie zugeführt, z.B. mit Heißluft oder Heizstrahlern. Es ist wichtig, daß die teilentwässerte, erwärmte Folie bis zur anschließenden Beschichtung mit der ersten PVDC-Dispersion ihre erhöhte Temperatur beibehält. Beim Auftrag dieser Dispersion muß die Temperatur der teilentwässerten Folie höher liegen als das Temperaturminimum der Filmbildung der ersten PVDC-Dispersion (Mindesttemperatur zur Filmbildung).

Ein weiteres wesentliches Merkmal des Verfahrens besteht darin, zum Beaufschlagen der teilentwässerten faserverstärkten Folie aus Cellulosehydrat-Gel mit dem die erste Oberflächenschicht ausbildenden Mittel eine hochkonzentrierte wäßrige Dispersion zu verwenden, deren Feststoffgehalt mindestens 45, vorzugsweise 45 bis 65, insbesondere 50 bis 60 Gew.-% beträgt und zum Beaufschlagen des die zweite Oberflächenschicht ausbildenden Mittels eine niedrigkonzentrierte wäßrige Dispersion zu verwenden, d.h. 10 bis 45 Gew.-%, wie sie bei der Herstellung von gasdichten Oberflächenschichten aus VDC-Mischpolymeren üblich ist. Es ist besonders zweckmäßig, wenn bei diesen Beschichtungsvorgängen die Wassermenge, welche von der teilentwässerten Folie aus Cellulosehydrat-Gel von der ersten hochkonzentrierten Dispersion aufgenommen wird, kleiner ist als die Wassermenge, welche die Folie bei der vorhergehenden Teilentwässerung abgegeben hat (Anspruch 8).

Die Menge der von der Folie aufzunehmenden Wassermenge wird durch eine entsprechende Einstellung des Feststoffgehaltes der Dispersionen und/oder ihrer Einwirkzeit auf die Folie erreicht.

Ein weiteres wesentliches Merkmal des Verfahrens besteht darin, daß das Beaufschlagen der Folie mit der zweiten PVDC-Dispersion in zeitlich kurzem Abstand ohne Zwischentrocknung der zuerst aufgebrachten PVDC-Dispersion erfolgt. Zweckmäßigerweise liegt dieser zeitliche Abstand bei etwa 0,5 bis 5 sec, insbesondere bei 1 bis 3 sec.

Ein wesentlicher Verfahrensschritt besteht ferner darin, daß man die Bahn bzw. den Schlauch aus dem Cellulosehydrat-Gel während des abschließenden Trockenprozesses zusätzlich in Querrichtung um etwa 1 bis 15, insbesondere 3 bis 12 % streckt, bezogen auf die ursprüngliche Breite der Faserbahn bzw. den ursprünglichen Umfang bei Verwendung eines Faserschlauches, wodurch der während der Teilentwässerung gegebenenfalls eingetretene geringe Schrumpf in Querrichtung zumindest ausgeglichen wird. Unmittelbar vor diesem Strecken beim abschließenden Trockenprozeß und somit nach dem Beschichten mit der die zweite Oberflächenschicht ausbildenden PVDC-Dispersion wird gegebenenfalls eine weitere Vortrocknung durchgeführt, bei der die Hauptmenge an Wasser entfernt wird, bis die Folie aus Cellulosehydrat-Gel einen Wassergehalt von etwa 80 bis 150 Gew.-% aufweist.

Die Filmbildung aus der wäßrigen PVDC-Dispersion erfolgt in an sich bekannter Weise beim Trocknen. Durch einen Wärmestoß, beispielsweise mit IR-Strahlen, wird die Dispersion zunächst auf der Oberfläche des Celluloseträgers fixiert. Der eingestellte Temperaturbereich darf jedoch nicht zu einer heftigen Verdampfung des Wassers unter Blasenbildung führen. Danach wird mit langsam ansteigender Temperatur weiter getrocknet bis der größte Teil der Feuchtigkeit entfernt ist. In diesem Teil der Trocknung zeigt die Folienoberfläche eine Temperatur von etwa 70 bis 98°C, welche durch die Verdunstungskälte beim Verdampfen des Wassers auch bei höherer Umgebungstemperatur nicht überschritten wird. Eine Überschreitung der Verdampfungstemperatur des Wassers ist in der Folienoberfläche zu vermeiden, da sich sonst in der Beschichtung Blasen und Poren (aufgeplatzte Blasen) bilden. Nachdem der Feuchtigkeitsgehalt in der Beschichtung auf etwa 5 % abgesunken ist, wird bei erhöhter Temperatur nachbehandelt, wobei die Oberfläche der Folie 120 bis 140°C erreicht.

Die infolge der schrumpfverhindernden Maßnahmen und der Querverstreckung während des Trockenprozesses erreichten Festigkeitswerte der Trägerschicht in Längs-und Querrichtung sind wesentlich für die Herstellung der Schlauchhülle mit einer Längsnaht. Die Reißfestigkeit kann 30 bis 35 N/mm² und die Reißdehnung 30 bis 50 % - (gemessen wie in EP-A-0 054 162 angegeben) erreichen.

Das zweimalige Beschichten der Folie mit der jeweiligen Dispersion erfolgt beispielsweise mit Drahtrakeln (wire bar). Es kann aber auch jede andere dosierende Beschich tungsvorrichtung verwendet werden, die sich zum kontinuierlichen Beschichten bewegter Folien eignet und die eine nur kurze Kontaktzeit (0,1 bis 2 sec) zwischen Dispersionsvorrat und Folie gestattet. Für den zweimaligen Antrag können auch Walzenantragssysteme oder mit einem Walzenantragssystem in Kombination ·mit einer Drahtrakel gearbeitet werden. Das Beschichtungsgewicht beträgt zweckmäßigerweise für die erste Oberflächenschicht 4 bis 9 g/m² und für die zweite Oberflächenschicht 3 bis 6 g/m².

Wie sich gezeigt hat, bilden die beiden Dispersionen nach dem Trocknen einen geschlossenen Film aus, der aus zwei fest aneinander haftenden Oberflächenschichten aufgebaut ist. Wird eine der beiden Dispersion eingefärbt, lassen sich beide Oberflächenschichten des Harzüberzuges im Querschnitt unter dem Mikroskop deutlich unterscheiden.

Der erwünschte feste Verbund zwischen Cellulosehydrat-Trägerschicht und der ersten Oberflächenschicht wird nicht erhalten, wenn man den Wassergehalt der Folie aus Cellulosehydrat-Gel bei der Teilentwässerung auf einen maximalen Wert von größer als 200 Gew.-% reduziert.

Die Folie nach der Erfindung mit dem speziellen Aufbau der Barriereschicht auf ihrer Oberfläche ist wegen der hohen Knickbeständigkeit dieses Harzüberzugs besonders geeignet als Wursthülle für Koch-und Brühwürste, insbesondere wenn sie gerafft werden sollen. Unter Kochwurst sind insbesondere Leberwurstsorten und Blutwurstsorten zu verstehen. Brühwürste sind beispielsweise Jagdwurst, Bierschinken, Fleischwurst, Gelbwurst und Mortadella. Alle diese Wurstsorten benötigen eine einwandfrei dichte Wursthülle.

Die Bildung einer Schlauchhülle mit längsaxial sich erstreckender Naht aus einer bahnförmigen Folie durch Versiegeln der Randbereiche der längsaxial sich erstreckenden Randzonen einer Folienbahn mit einem Folienstreifen ist an sich bekannt, wozu ebenfalls auf die EP-A-0 054 162 verwiesen wird. Als Siegelmaterial dient der thermoplastische Harzüberzug, welcher beim Erwärmen klebrig wird. Für die Herstellung von Überlappungsnähten ist es zweckmäßig, wenn die Folie auch auf der gegenüberliegenden Oberfläche einen Überzug aus siegelfähigem thermoplastischem Kunstharz aufweist. Die Folie kann auch als siegelbarer Folienstreifen verwendet werden, wobei die Randbereiche der den Schlauch bildenden Folie einander auf Stoß genähert und der Folienstreifen mit beiden Randbereichen versiegelt wird (Fig. 3 der EP-A-0 037 543). Die den Schlauch bildende Folie muß mit der dem Folienstreifen zugewendeten Oberflächenschicht selbstverständlich siegelfähig sein. Vorzugsweise besteht diese Oberflächenschicht aus dem siegelfähigen Harzüberzug der Erfindung, welche die Innen-oder Außenseite des Schlauches bildet, und der Folienstreifen ist auf der Innen-oder Außenseite des Schlauches mit seiner gasundurchlässigen Schicht mit dieser siegelfähigen Sperrschicht versiegelt.

Befindet sich der undurchlässige Harzüberzug auf der Schlauchinnenseite, zeigt die Verpackungshülle starken Schrumpf und kann sich dem Füllgut gut anpassen. Als Wursthülle liegt sie prall an der Wurstmasse an und verleiht der Wurst ein ansehnliches Aussehen. Sofern dieser Schrumpf nicht erwünscht ist, wird die Folie in der Weise zu einer Schlauchhülle geformt, daß die Barriereschicht der Folie die Außenseite der Schlauchhülle bildet.

Die erfindungsgemäße Verpackungshülle wird beispielsweise mit der aus der US-A-3,988,804 bekannten Vorrichtung gerafft.

Die gerafften Verpackungshüllen zeigen nach einwöchiger Lagerung im Tropenraum (38°C, 98 % r.F.) keine Beschädigung der Überzugsschicht im Bereich der Raffalten.

Die Erfindung wird durch die folgenden Beispiele näher erläutert:

Beispiel 1

Eine Bahn aus langfaserigem Hanfpapier mit einer Flachbreite von 235 mm und einem Flächengewicht von 21 g/m² wird beidseitig mit Viskose beschichtet. Danach wird auf die mit Viskose versehene Bahn zur Fällung, d.h. Koagulation, und Regenerierung Regenerierflüssigkeit aufgebracht. Die Bahnbreite wird von an den beiden Bahnkanten angreifenden Nadelketten konstant gehalten, so daß die gewöhnlich beim Koagulieren und Regenerieren auftretende Schrumpfung in Querrichtung verhindert wird. Die faser verstärkte Folienbahn aus Cellulosehydrat-Gel durchläuft anschließend Wasch-, Entschwefelungs-und Weichmachungsbäder. Das letzte Bad, das die Folienbahn aus Cellulosehydrat-Gel durchläuft, enthält eine 1 gew.-%ige wäßrige Lösung eines Haftvermittlers auf Basis eines kationischen Harzes, welches ein Reaktionsprodukt von Adipinsäure, Diethylentriamin und Epichlorhydrin ist. Die Folienbahn wird mit dieser Lösung beidseitig beschichtet. Nach Verlassen dieses Bades hat die Folienbahn aus Cellulosehydrat-Gel eine Breite von 210 mm und einen Wassergehalt von 250 Gew.-%.

Zur nun folgenden Teilentwässerung wird die Folienbahn über geheizte Walzen mit einer Oberflächentemperatur von 70 bis 80°C geführt. Bei diesem Schritt schrumpft die Folienbahn auf eine Breite von 208 mm und ihr Wassergehalt wird auf 160 Gew.-% reduziert.

Nach dieser Zwischenstufe wird die noch 30-40°C warme Folienbahn einer ersten Beschichtungsvorrichtung zum Aufbringen der die erste Oberflächenschicht ausbildenden Dispersion zugeführt, wie sie in der US-A-4,116,162 beschrieben ist. Als Dosierrakel wird eine Drahtrakel mit einer Drahtstärke von 100 µm verwendet. Die aufgebrachte erste Schicht ergibt ein Flächengewicht von etwa 6 bis 8 g/m².

Als Beschichtungsmittel zur Ausbildung der ersten Oberflächenschicht wird eine wäßrige Polymerdispersion eines Mischpolymerisats aus überwiegend Vinylidenchlorid-Einheiten und geringen Anteilen von Acrylnitril-Einheiten und anderen Copolymeren mit einem Feststoffgehalt von 55 % verwendet ([R]Diofan 235 D, Hersteller BASF), welches für die Bildung von weichen, wenig kristallisierenden Filmen bekannt ist.

Nach diesem ersten Antrag wird die beschichtete Folienoberfläche im zeitlichen Abstand von 2 sec einer zweiten, gleichartigen Beschichtungsvorrichtung zugeführt. Als zweites Beschichtungsmittel wird eine wäßrige Polymerdispersion aus überwiegend Vinylidenchlorid-Einheiten und geringen Anteilen an Methylacrylat sowie weiteren Comonomeren mit einem Feststoffgehalt von 40 Gew.-% eingesetzt ([R]Diofan 193 D, Herst. BASF), welches für die Bildung von harten, weitgehend kristallinen Filmen bekannt ist. Die aufgebrachte zweite Oberfläche zeigt ein Flächengewicht von 4 bis 6 g/m².

Die mit den Copolymerisat-Dispersionen beschichtete Folienbahn wird an ihren Kanten von Nadelkluppenketten erfaßt und in einem Spannrahmen durch mehrere Etagen eines Trockenfeldes geführt. Im Spannrahmeneinlauf wird die Folie auf eine Breite von 218 bis 220 mm in Querrichtung verdehnt und danach -während sie weiterhin auf diese Breite gehalten wird -getrocknet, vorzugsweise bei etwa 130°C. Die Restfeuchte der Folie beträgt etwa 7 Gew.-%. Die Barriereschicht hat eine Dicke entsprechend einem Flächengewicht von etwa 13 bis 14 g/m². Sie ist geschlossen und zeigt eine Wasserdampfdurchlässigkeit von 0,5 bis 2,0 g/m²d.(DIN 53 122).

Aus der Folie wird nun ein Schlauch mit aneinanderstoßenden Rändern geformt und mit einem Folienstreifen versiegelt, wie es beispielsweise in Fig. 3, 4, oder 7 der EP-A-0 058 240 beschrieben ist.

Der Schlauch wird mit der aus der US-A-3,988,804 bekannten Vorrichtung eng gerafft. Die erhaltenen Raupen werden eine Woche im Tropenraum (38°C, 98 % r.F.) gelagert. Danach werden Raupenabschnitte entrafft, einseitig abgebunden und mit 0,5 %-Methylenblaulösung behandelt. An den Durchbrüchen der Überzugsschicht muß die Celluloseträgerschicht vom Farbstoff angefärbt werden. Nach dem Entfernen der Lösung und waschen mit Wasser lassen sich keine Beschädigungen des Überzugs erkennen.

Beispiel 2

Die Papierbahn des Beispiels 1 wird zu einem Schlauch gebogen und der erhaltene Papierschlauch in üblicher Weise beidseitig mit Viskose beschichtet. Danach durchläuft der Schlauch die üblichen Stufen zur Koagulation und Regenerierung der Cellulose sowie Wasch-, Entschwefelungs-und Weichmacherbäder. Danach erfolgt die Außenbeschichtung des Schlauches mit der Lösung des Haftvermittlers nach Beispiel 1.

Der Schlauch wird analog zu Beispiel 1 teilentwässert, danach mit den zwei verschiedenen Polymerdispersionen im flachgelegten Zustand von außen beschichtet und abschließend im aufgeblasenen Zustand getrocknet.

Nach dem Raffen wird der Celluloseschlauch wie in Beispiel 1 auf Beschädigungen der Sperrschicht geprüft. Es lassen sich keine Durchbrüche feststellen.

**Ansprüche**

1. Bahn-oder schlauchförmige Verpackungsfolie, insbesondere Wursthülle, mit einer Trägerschicht auf Basis von faserverstärkter Cellulose und einem geschlossenen sauerstoff-und wasserdampfundurchlässigen Harzüberzug auf Basis von Vinylidenchlorid-Einheiten enthaltenden Mischpolymeren, welcher gegebenenfalls mit einer haftvermittelnden Schicht auf der Oberfläche der Trägerschicht verankert ist, dadurch gekennzeichnet, daß der Harzüberzug zur Verbesserung der Knickbeständigkeit aus wenigstens zwei übereinanderliegenden Schichten aufgebaut ist, daß die der Trägerschicht benachbarte erste Schicht des Harzüberzuges aus einem flexible Filme bildenden VDC-Mischpolymerisat und daß die äußere zweite Schicht des Harzüberzuges aus einem harte Filme bildenden VDC-Mischpolymerisat besteht.

2. Verpackungsfolie nach Anspruch 1, dadurch gekennzeichnet, daß das VDC-Mischpolymerisat der ersten Schicht des Harzüberzuges 80 bis 88 Gew.-Teile Vinylidenchlorid-Einheiten und ein bis drei weitere äthylenisch ungesättigte Comonomer-Einheiten umfaßt, zu denen polare Gruppen aufweisende Comonomere, insbesondere Acrylnitril oder Methacrylnitril, und/oder sterisch hindernde Gruppen aufweisende Comonomere, insbesondere Alkylacrylat und/oder Alkylmethacrylat (Alkyl = $C_4$ -$C_8$) sowie gegebenenfalls weitere filmbildende Comonomer-Einheiten gehören.

3. Verpackungsfolie nach Anspruch 1 oder 2, dadurch gekennzeichnet, daß das VDC-Mischpolymerisat der zweiten Schicht des Harzüberzuges 85 bis 95 Gew.-Teile Vinylidenchlorid-Einheiten und ein bis drei weitere äthylenisch ungesättigte Comonomer-Einheiten umfaßt, zu denen Alkylacrylat und/oder Alkylmethacrylat (Alkyl = Methyl, Äthyl), sowie gegebenenfalls weitere filmbildende Comonomer-Einheiten gehören.

4. Schlauchförmige Verpackungsfolie, insbesondere Wursthülle, nach einem der Ansprüche 1 bis 3, dadurch gekennzeichnet, daß sich der Harzüberzug auf der Außenseite befindet.

5. Schlauchförmige Verpackungshülle, insbesondere Wursthülle, bestehend aus einer zu einem Schlauch gebogenen bahnförmigen Folie, deren längsaxial sich erstrekkenden Ränder mit einer Naht miteinander verbunden sind, dadurch gekennzeichnet, daß sie aus der bahnförmigen Folie nach Anspruch 1 besteht.

6. Schlauchförmige Verpackungsfolie, insbesondere Wursthülle nach einem der Ansprüche 1 bis 5, dadurch gekennzeichnet, daß sie gerafft ist.

7. Verfahren zur Herstellung der bahn-oder -schlauchförmigen Verpackungsfolie nach einem der Ansprüche 1 bis 3, umfassend die nachstehenden aufeinanderfolgenden Schritte

(a) Beschichten einer gegebenenfalls zu einem Schlauch gebogenen Faserbahn mit Viskose

(b) Koagulieren der Viskose

(c) Regenerieren der koagulierten Viskose zu Cellulosehydrat-Gel

(d) Waschen der Bahn bzw. des Schlauches aus Cellulosehydrat-Gel

(e) gegebenenfalls Beaufschlagen der Bahn bzw. des Schlauches aus Cellulosehydrat-Gel mit einer Haftvermittler enthaltenden Flüssigkeit

(f) Trocknen unter Bildung einer bahn-oder -schlauchförmigen Verpackungsfolie aus faserverstärkter regenerierter Cellulose auf einen Wassergehalt gleich/kleiner als 15 Gew.-%, bezogen auf das Gesamtgewicht der Folie,

dadurch gekennzeichnet, daß man nach dem Schritt (d) bzw. (e) die noch aus Cellulosehydrat-Gel bestehende faserverstärkte Folie bis zu einem Wassergehalt von 130 bis 225, insbesondere 160 bis 200 Gew.-%, bezogen auf die faserverstärkte Folie aus Cellulosehydrat-Gel, vortrocknet und danach als erste Oberflächenschicht die erste wäßrige PVDC-Dispersion auf eine Folienoberfläche aufbringt, wobei der Feststoffgehalt dieser Dispersion mindestens 45, vorzugsweise 45 bis 65, insbesondere 50 bis 60 Gew.-% beträgt, und daß man sofort anschließend auf diese erste Oberflächenschicht als zweite Oberflächenschicht die zweite wäßrige PVDC-Dispersion niedrigerer Konzentration aufbringt und danach im Schritt (f) den geschlossenen Harzüberzug durch Erhitzen erzeugt.

8. Verfahren nach Anspruch 7, dadurch gekennzeichnet, daß die Wassermenge, welche aus der hochkonzentrierten Dispersion von der Folie aufgenommen wird, kleiner ist als die in der vorhergehenden Vortrocknung von der Folie abgegebene Wassermenge.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 347 697 (OSCAR MAYER)<br>* Zusammenfassung I * | 1 | A 22 C 13/00 |
| A | US-A-4 192 904 (G. GERIGK et al.)<br>* Anspruch 1 * | 1 | |
| A | US-A-2 961 323 (W.F. UNDERWOOD et al.)<br>* Ansprüche 1,2; Spalte 2, Zeilen 22-67 * | 1 | |
| D,A | EP-A-0 054 162 (HOECHST)<br>* Ansprüche 1-3 * | 1 | |
| A | EP-A-0 008 646 (HOECHST)<br>* Ansprüche 1,2 * | 1 | RECHERCHIERTE SACHGEBIETE (Int. Cl.4)<br><br>A 22 C |

Der vorliegende Recherchenbericht wurde für alle Patentansprüche erstellt.

| Recherchenort | Abschlußdatum der Recherche | Prüfer |
|---|---|---|
| DEN HAAG | 08-02-1987 | PERMENTIER W.A. |